(19) **Europäisches Patentamt**

**European Patent Office**

**Office européen des brevets**

(11) Publication number: **0 319 489 B1**

(12) **EUROPEAN PATENT SPECIFICATION**

(45) Date of publication of patent specification: **09.09.92** (51) Int. Cl.⁵: **C25B 11/16**, C25B 1/00

(21) Application number: **88830505.9**

(22) Date of filing: **28.11.88**

(54) **Electrode catalyst and method for production thereof.**

(30) Priority: **27.11.87 JP 297673/87**

(43) Date of publication of application:
**07.06.89 Bulletin 89/23**

(45) Publication of the grant of the patent:
**09.09.92 Bulletin 92/37**

(84) Designated Contracting States:
**CH DE FR GB IT LI SE**

(56) References cited:
**FR-A- 2 133 729**
**US-A- 4 510 034**

**PATENT ABSTRACTS OF JAPAN, page 35 C 476; & JP-A-62 197 115 (FUJI ELECTRIC CO. LTD) 31-08-1987**

(73) Proprietor: **Permelec Electrode Ltd**
**No. 1159 Ishikawa**
**Fujisawa-shi Kanagawa(JP)**

(72) Inventor: **Nishiki, Yoshinori**
**4-2, Shonandai 6-chome**
**Fujisawa-shi Kanagawa(JP)**
Inventor: **Nakamatsu, Shuji**
**1384, Nakada-cho Izumi-ku**
**Yokohama-shi Kanagawa(JP)**
Inventor: **Shimamune, Takayuki**
**3006-30, Honmachida**
**Machida-shi Tokyo(JP)**

(74) Representative: **Pellegri, Alberto et al**
**c/o Società Italiana Brevetti S.p.A. Via Puc-cini, 7**
**I-21100 Varese(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### FIELD OF THE INVENTION

The present invention relates to an electrode catalyst for electrolysis and a method for the production thereof, which is useful for electrolytic oxidation reactions at high electric potentials including production of ozone by the electrolysis of water, production of peroxides by electrolysis of aqueous solutions, and electrolytic oxidation of organic material.

### BACKGROUND OF THE INVENTION

The recent trend in the electrolytic industry is to employ an electrode comprising a substrate having high stability under anode conditions, e.g., titanium and titanium alloys, coated with an electrode catalyst substance, particularly the oxides of the platinum group metals, in place of soluble electrodes as exemplified by carbon. This electrode, called a dimensionally stable anode (DSA) or a dimensionally stable electrode (DSE), is used in a variety of industrial electrolytic processes including production of oxygen gas by electrolysis of water and production of halogen or alkali hydroxide by electrolysis of an aqueous solution of metal halide, because of its excellent electrolytic characteristics and durability, as described in U.S. Patents 3,711,385 and 3,632,498.

The anode substance plays an important role in production of ozone gas and peroxides utilizing the anodic electrolytic reaction and in organic electrolysis. In the electrolytic reaction for the production of ozone gas, the electric potential is high, and even if DSA is used, low potential electrolytic reactions predominate. Thus, DSA is unsuitable for the electrolytic production of ozone gas, and only a titanium electrode coated with platinum is utilized.

In the electrolysis for the production of ozone gas, an anodic catalytic substance which can be used in place of DSA with an increase in the efficiency of operation is needed. Thus, various investigations have been made not only in regard to electrode catalysts but also with respect to the electrode and cell structure where lead, lead oxide, carbon, etc. are used as electrode substances, as J. Elec. Chem. Soc., 132 p. 367 ff. (1985) and U.S. Patent 4,416,747.

In the use of an electrode containing lead dioxide for the production of ozone, durability and mechanical strength of the electrode are poor and the lead dioxide electrode catalyst has a relatively high electrolytic voltage which increases the amount of electric power consumed.

In the publication No. US-A-4 510 034, an insoluble lead dioxide anode is disclosed as comprising a porous metal substrate consisting of Ti, Zr or an alloy thereof, covered with an intermediate coating layer composed mainly of a platinum group metal or an oxide thereof. The precoated metallic substrate is then coated with an outer layer of lead dioxide, which may comprise several layers of $\alpha$-$PbO_2$ and $\beta$-$PbO_2$, formed alternately one on top of the other.

The present inventors have proposed various improvements of the lead dioxide-coated electrode. However, the improved electrodes previously proposed by the present inventors are still not satisfactory in that a decrease in electrolytic voltage ascribable to the efficiency of the catalyst itself was insufficient, while an increase in current efficiency could not be achieved because the material to be electrolyzed in an electrolytic solution is not in sufficient contact with the active substance on the electrode. Furthermore, if the electrode active substance is too dense, gas is drawn insufficiently resulting in a higher electrolytic voltage.

### SUMMARY OF THE INVENTION

An objective of the present invention is to provide a lead dioxide electrode catalyst having the desired activity and lower electrolytic voltage, and a method for the production thereof.

The present invention relates to an electrode catalyst comprising a lead dioxide electrically deposited layer having fine particles containing $\beta$-lead dioxide powder dispersed therein.

The present invention also relates to an electrode catalyst comprising a substrate for electric deposition and a lead dioxide electrically deposited layer having fine particles containing $\beta$-lead dioxide powder dispersed therein.

The present invention relates to a method for producing the electrode catalyst which comprises electrolyzing a substrate for electric deposition in an aqueous lead nitrate solution having fine particles containing $\beta$-lead dioxide powder suspended therein to form a lead dioxide electrically deposited layer on the substrate, the layer having particles containing $\beta$-lead dioxide powder dispersed therein, and then separating the lead dioxide electrically deposited layer from the substrate for electric deposition.

The present invention also relates to a method for producing the electrode catalyst which comprises electrolyzing a substrate for electric deposition in an aqueous lead nitrate solution having fine particles containing $\beta$-lead dioxide powder suspended therein to form a lead dioxide electrically deposited layer on the substrate, the layer having particles containing $\beta$-lead dioxide powder dispersed therein.

## DETAILED DESCRIPTION OF THE INVENTION

The present invention is based on the finding that a lead dioxide catalyst layer formed by electrodeposition on a substrate has a higher strength and operates at a lower electrolytic voltage as compared to a lead dioxide catalyst layer on a substrate formed by a conventional technique such as the hot press method.

The lead dioxide catalyst layer formed by the electrodeposition of the present invention is denser than a lead dioxide catalyst formed by the conventional hot press method and thus the strength of the catalyst itself is increased. Furthermore, by incorporating $\beta$-lead dioxide powder into the catalyst, gas removal is enhanced and the electrolytic voltage is decreased while the strength of the catalyst is maintained.

The electrode catalyst of the present invention is formed by electrically depositing a layer of lead dioxide on a substrate surface. Substrates that may be used in the present invention include those conventionally used as an electrode substrate such as valve metals (e.g., titanium, zirconium, niobium and tantalum) and alloys thereof, which are suitable for use in the form of plate, bar and porous mesh and which are easy to handle and have good durability. These substrates are used as a unitary assembly with the electrode catalyst layer.

In the present invention, an ion exchange membrane which is a solid polymer electrolyte (SPE) (e.g., fluorinated hydrocarbon resin-based ion exchange membranes) and various electricity collectors can also be used for the substrate. In the case, electricity collectors having an attached catalyst layer and SPE electrodes can be formed by a single step, and thus an operation of separately forming an electrode catalyst and then fixing it on the membrane or electricity collector, as is conventionally performed, may be omitted.

In the present invention, as the substrate, various fine particles acting as nuclei for the growth of lead dioxide electrically deposited layer can also be used. Catalyst particles formed in this manner can be used as catalysts for various reactions. In addition, after the formation of the lead dioxide electrically deposited layer on a suitable substrate, the catalyst layer may be peeled apart from the substrate and used as such in various reaction.

Non-limiting conditions in the electrodeposition for formation of the lead dioxide layer onto the substrates are as follows: a 300 to 500 g/ℓ aqueous lead nitrate solution may be used as an electrolytic solution, and the electrodeposition may be carried out at a temperature of 40 to 60°C, a liquid pH of not more than 3 and a current density of 1 to 10 A/dm². Under such conditions, $\beta$-lead dioxide is mainly electrically deposited on the substrate.

The lead dioxide electrically deposited layer formed by the above electrodeposition process contains fine particles which are composed mainly of $\beta$-lead dioxide powder. $\beta$-lead dioxide has inherent catalytic activity, has good corrosion resistance in various solutions such as strong acids (e.g., sulfuric acid) and further has excellent electrical conductivity (about $10^{-4}$ Ωcm). $\alpha$-lead dioxide is unsuitable because it is inferior in corrosion resistance and electrical conductivity to $\beta$-lead dioxide.

The $\beta$-lead dioxide fine particle diameter are not particularly limited in the present invention, but the particle diameter is preferably smaller than that passing through 100 mesh (Tyler mesh; hereafter the same), i.e., 150 $\mu$m or less, so as to obtain a firm surface. In the case of particles having a particle diameter smaller than that passing through 345 mesh, i.e., 40 $\mu$m or less, it is preferred that the smaller particles not constitute more than 50% of the total weight of particles. If the proportion of the particles having a particle diameter smaller than about 40 $\mu$m is greater than 50%, firmness is increased at the expense of porosity.

The dispersed fine particles in the lead dioxide electrically deposited layer generally contain not less than 20 wt% of $\beta$-lead dioxide powder and they may consist of $\beta$-lead dioxide powder. Depending on its use, an electrolytic cocatalyst can be contained as the dispersed fine particles, such as a fluorine resin (e.g., polytetrafluoroethylene (PTFE)), agar, gelatin, a perfluoro ion exchange resin, carbon fluoride, carbon, and oxides of at least one of titanium, zirconium, niobium and tantalum. For example, particles of a fluorine resin, a perfluorosulfonic acid-type ion exchange resin, and carbon fluoride are suitable for production of ozone. For production of peroxides, the oxides of titanium, zirconium, niobium, and tantalum are suitable for use as electrolytic cocatalysts. For organic electrolytic oxidations, carbon, as well as those described above, is suitable.

The proportion of the dispersed particles containing $\beta$-lead dioxide powder in the total electrically deposited layer is preferably from 5 to 70 vol%. If less than 5 vol%, the effect of extension of surface area due to reduction in porosity is insufficient. On the other hand, if in excess of 70 vol%, the mechanical strength may be reduced.

The above particles can be incorporated in the lead dioxide electrically deposited layer by suspension plating in which electrodeposition is carried out by suspending $\beta$-lead dioxide powder and electrolytic cocatalyst particles in the above electrolytic solution. Alternatively, a paste containing the above particles is coated followed by electrodeposition of lead dioxide and this process may be repeated.

The electrode catalyst of the present invention is formed on a substrate. Depending on the type of the substrate, the catalyst can have various forms. When a conventional electrode substrate such as titanium is used as the substrate, the electrode catalyst of the present invention is formed on the surface thereof to provide an electrode structure; when an ion exchange membrane is used as the substrate, the electrode catalyst can be used as a SPE type electrode catalyst; when an electric collector is used as the substrate, the electrode catalyst of the present invention is used as, for example, a zerogap-type electrode in which the catalyst layer is brought into close contact with an ion exchange membrane; and when fine particle nuclei are used as the substrate, lead dioxide is electrically deposited on the nuclei surface to form catalyst particles.

In the case where a substrate merely for allowing lead dioxide to be electrically deposited thereon is used, the electrically deposited layer is peeled apart from the substrate and can be used as such or after pulverization in various electrode reactions. The catalyst, in such form, is particularly suitable for use in production of ozone by water electrolysis, in production of peroxides by electrolysis of aqueous solutions, and in organic electrolytic oxidation such as decomposition of phenol, nitrile, and the like.

In the electrode catalyst of the present invention, a lead dioxide electrically deposited layer in which fine particles containing $\beta$-lead dioxide powder is dispersed, is formed on a substrate. As electrode active substances, the $\beta$-lead dioxide powder has a higher overvoltage (by about 500 mV) than the platinum group metal oxides and the like. Thus the electrode catalyst of the present invention is useful for production of ozone by electrolysis of water, production of peroxides by electrolysis of aqueous solutions, organic electrolytic oxidation and other electrolysis, which are carried out at high electrolytic overvoltage as compared to the electrolysis of alkali halide for the production of alkali hydroxide and electrolysis of water to form oxygen and hydrogen.

Since the electrically deposited layer has a three dimensional extension, the contact between a reactant and the electrode active substance is increased, which increases current efficiency and decreases cell voltage.

Since the electrically deposited layer contains particles, the degree of porosity can be adjusted by varying the density of the deposited layer and the degree of gas removal can thus be controlled. An apparatus suitable for gas removal can be readily assembled.

Since the lead dioxide layer is more densely formed on the substrate by electrodeposition, the electrolytically deposited layer is stronger than a lead dioxide catalyst layer formed by the conventional hot press method. Furthermore, the electrolytic voltage can be decreased.

The following are non-limiting examples of the present invention.

## EXAMPLE 1

An expanded mesh made of pure titanium and having a thickness of 1.5 mm was smoothed and attached by resistance welding to a mesh also made of titanium having a thickness of 0.3 mm. This assembly served as a substrate. This substrate was degreased and washed in a boiling 20% aqueous hydrochloric acid solution. After the above pretreatment, an aqueous hydrochloric acid solution containing dissolved salts of platinum: titanium: tantalum in proportions of 50:40:10 (mol%) respectively was applied to the surface of the substrate using a brush. The coated assembly was baked at 550°C for 10 minutes in flowing air to provide an oxide underlying layer of platinum-titanium-tantalum. This operation was repeated four times.

On the above underlying layer, a lead dioxide layer containing $\beta$-lead dioxide powder was electrically deposited under the following conditions.

An aqueous lead nitrate solution was first electrolyzed to form $\beta$-lead dioxide, which was then ground for 24 hours in an agate mortar and screened to collect particles having a diameter of not greater than 100 $\mu$m.

An aqueous electrodeposition solution containing 400 g/$\ell$ of lead nitrate was prepared, and the above screened $\beta$-lead dioxide powder was added thereto in an amount of 3 wt%. While the electrodeposition solution was vigorously stirred so as not to precipitate the $\beta$-lead dioxide particles, electrolysis was carried out for about 4 hours using the substrate with the underlying layer provided thereon as an anode at a current density of 4 A/dm$^2$ to form a coating on the substrate having an apparent thickness of about 2 mm. During electrolysis, the temperature was 65°C and the pH of the solution was 1 to 2.

For comparison, a coating layer was formed in the same manner as above except that $\beta$-lead dioxide particles were not suspended in the aqueous lead nitrate solution. The apparent thickness of the coating layer was about 0.8 mm and the increase in the weight following electrolytic coating was about one-half. Thus, it was found that the particle content in the coating layer previously prepared using the $\beta$-lead dioxide particle-suspended electrodeposition solution was about 50 wt% of the total coating, and the coating layer was porous.

With the substrate in close contact with a perfluorosulfonic acid type ion exchange membrane, manufactured by du Pont and sold under the trademark "Nafion") where the substrate served as an anode and a platinum net served as a cathode, electrolysis was carried out at a temperature of 10°C and a current density of 100 A/dm$^2$ using a mixture of 5% hydrofluoric acid and a 15% aqueous sulfuric acid solution as an electrolyte. In the case of the electrode having electrically deposited β-lead dioxide, the current efficiency and electrolytic voltage in the generation of ozone were 16% and 3.6 V, respectively. In the case of the comparative electrode, the current efficiency and the electrolytic voltage were 10% and 4.2 V, respectively.

COMPARATIVE EXAMPLE 1

A substrate having an underlying layer was produced in the same manner as in Example 1. On the substrate, β-lead dioxide powder having a diameter of 20 to 100 μm was hot pressed for 10 minutes under a pressure of 100 kg/cm$^2$ at a temperature of 120°C to form a lead dioxide attached layer.

Using the electrode substrate with the hot pressed layer, ozone production was carried out under the same conditions as in Example 1. The current efficiency and the electrolytic voltage were 8% and 5 V, respectively.

EXAMPLE 2

On a titanium substrate having an underlying layer as produced in the same manner as in Example 1, a β-lead dioxide layer was formed at 70°C for 30 minutes at a current density of 4 A/dm$^2$ using 400 g/ℓ of an aqueous lead nitrate solution as an electrolyte. Thereafter, using a mixture of 10 ml/ℓ of an aqueous polytetrafluoroethylene (PTFE) suspension and 400 g/ℓ of an aqueous lead nitrate solution with β-lead dioxide fine particles suspended therein as an electrolyte, a β-lead dioxide layer was electrically deposited on the above substrate at 70°C for 30 minutes at a current density of 4 A/dm$^2$. The above two operations were each repeated four times to obtain a coating having a thickness of about 1.5 mm.

The electrode with the coating provided thereon was brought into close contact with a perfluorosulfonic acid type ion exchange membrane. Using the resulting substrate assembly as an anode, electrolysis was carried out at a current density of 100 A/dm$^2$ using an aqueous sulfuric acid solution containing a small amount of silicafluoric acid as an electrolyte. For comparison, electrolysis was carried out under the same conditions as above using the same comparative electrode as described in Example 1.

For the electrode of this example comprising an electrically deposited layer of β-lead dioxide and PTFE cocatalyst, the current efficiency for generation of ozone at the anode was 16%. On the other hand, in the case of the comparative electrode, the current efficiency was 8%.

EXAMPLE 3

An electrode with an electrically deposited lead dioxide layer coated thereon was produced in the same manner as in Example 1 except that β-lead dioxide powder containing 10 vol% zirconium oxide and passing through a 250 mesh screen was used in place of the β-lead dioxide powder.

Using a 5 cm x 5 cm electrode thus prepared as an anode, 3 liters of a gold plating waste containing 5,000 ppm of cyanide was electrolyzed at a current density of 10 A/dm$^2$ to decompose cyan ions. For comparison, electrolysis was carried out using a platinum plated titanium electrode as an anode.

After 10 minutes of electrolysis, the concentration of cyanide in the waste was decreased to 500 ppm in the case of the present electrolysis. On the other hand, the cyanide concentration in the comparative electrolysis was 2,200 ppm.

EXAMPLE 4

The surface of a commercially available perfluorosulfonic acid type cation exchange membrane (manufactured by du Pont and sold under the trade name "Nafion 117") was roughened using #1000 emery paper. The ion exchange membrane was then dipped in a 5 wt% aqueous solution of nitric acid to convert the sulfonic acid group thereof into the H type. This ion exchange membrane was incorporated in a two chamber electrolytic cell as a diaphragm. In one of the chambers, 5 g/ℓ of an aqueous solution of chloroplatinic acid was introduced, and in the other chamber, 10 g/ℓ of an aqueous hydrazine solution was introduced. By allowing the solutions to stand for 24 hours, a platinum layer was formed on one side of the diaphragm.

Independently, β-lead dioxide prepared by the electrolytic method of the present invention was ground in an agate mortar. The fine particles of β-lead dioxide obtained by passing through a 250 mesh screen were kneaded in combination with an aqueous PTFE suspension (produced by Mitsui Fluorochemical Co., Ltd. under the trade name "30J"; PTFE content 1 wt%) and a perfluoro ion exchange resin to prepare a paste. This paste was brush coated on the opposite side of the membrane on which the platinum was deposited, allowed to stand, smoothed and then heat pressed at a temperature of 160°C to form a lead dioxide attached layer.

The ion exchange membrane thus-prepared with platinum attached on one side and $\beta$-lead dioxide on the other was again placed into the two chamber electrolytic cell. In the chamber facing the $\beta$-lead dioxide side at the membrane, 400 g/ℓ of an aqueous lead nitrate solution was introduced. Using the platinum on the ion exchange membrane as a cathode and a titanium plate placed in contact with the $\beta$-lead dioxide attached layer as an anode, electrolysis was carried out for 2 hours at 60°C at 2 A/dm$^2$ to form an electrically deposited lead dioxide layer.

Electric collectors of porous nickel with platinum plated on the surface thereof used at the cathode side, and a titanium mesh with $\beta$-lead dioxide coated thereon used at the anode (lead dioxide) side were placed in contact with the above electrode structure. Deionized water was introduced in at the anode side and electrolyzed. At 20°C, and a current density 100 A/dm$^2$, oxygen gas containing 14% ozone was obtained. The cell voltage during electrolysis was 3.7 V.

## COMPARATIVE EXAMPLE 2

Ozone was generated under the same conditions as in Example 4, using an ion exchange membrane in which the formation of an electrically deposited layer using an aqueous lead nitrate solution was omitted. Only the lead dioxide attached layer was formed. Oxygen gas containing 9% ozone was obtained. The cell voltage during electrolysis was 5.1 V.

## EXAMPLE 5

An ion exchange membrane with platinum attached to one side thereof was prepared in the same manner as in Example 4. $\beta$-lead dioxide passing through a 345 mesh screen was kneaded with ethyl alcohol to prepare a paste. This paste was coated on the opposite side of the ion exchange membrane relative to the platinium-deposited side, dried at room temperature, smoothed and then pressed at a temperature of 160°C. Furthermore, a lead dioxide electrically deposited layer was formed by electrolysis in the same manner as in Example 1. The solid electrolyte single electrode structure thus produced was incorporated in the same electrolytic cell as in Example 1, and deionized water was introduced in the anode chamber and electrolyzed. Under conditions of temperature 20°C and current density 100 A/dm$^2$, oxygen gas containing 12% ozone was obtained. The cell voltage during electrolysis was 4.2 V.

## EXAMPLE 6

The ion exchange membrane of Example 4 was activated by sputtering argon ions to the surface thereof. The ion exchange membrane was converted into the H type by dipping in a 5 wt% aqueous nitric acid solution and then incorporated as the diaphragm of the two chamber electrolytic cell. A platinum coating was formed on one side in the same manner as in Example 4.

$\beta$-lead dioxide fine particles obtained by electrolysis and a mixture of titanium oxide and zirconium oxide particles were treated in vacuum at 1,100°C for 6 hours to obtain partially reduced fine particles. These particles were kneaded with an aqueous PTFE suspension to prepare a paste. This paste was coated on the ion exchange membrane in the same manner as in Example 1 to form an attached layer.

The ion exchange membrane thus prepared was incorporated in the two chamber electrolytic cell. At the $\beta$-lead dioxide layer side, 400 g/ℓ of an aqueous lead nitrate solution containing a suspension of fine particles of the same composition as the paste was introduced. At 65°C and 2 A/dm$^2$, an electrically deposited layer of $\beta$-lead dioxide containing the above fine particles was formed on the attached layer containing $\beta$-lead dioxide to thereby produce a solid electrolyte type electrode structure.

The electrode structure thus prepared was incorporated in an electrolytic cell in the same manner as in Example 4, and deionized water was electrolyzed. At 20°C and a current density 100 A/dm$^2$, oxygen gas containing 16% of ozone was obtained from the anode compartment. The cell voltage during electrolysis was 3.6 V.

## EXAMPLE 7

A fine mesh (long diameter: 2.5 mm; short diameter: 1.6 mm) having a thickness. of 0.3 mm was welded to the surface of an expanded mesh of pure titanium having a thickness of 1.5 mm to form an electric collector. This electric collector was welded to a flange made of titanium plate. This welded assembly was degreased and washed with a boiling 20 wt% aqueous hydrochloric acid solution for 3 minutes to carry out pre-treatment. A coating of platinum-titanium-tantalum in proportions of 25-60-15 mol% respectively was then formed on the titanium plate by the thermal decomposition method of Example 1 to form an underlying oxide layer.

Using a solution of lead oxide in a 30 wt% aqueous sodium hydroxide solution as an electrolyte and the titanium mesh with the underlying layer formed thereon as an anode, electrolysis was carried out for 30 minutes at 40°C and a current of 1 A/dm$^2$ to form a coating layer of $\alpha$-lead dioxide on the above electric collector.

A commercially available perfluorosulfonic acid type cation exchange membrane (Nafion 117), the surface of which was roughened with #1000 emery paper, was used as a solid electrolyte. On one side of the ion exchange membrane, a solution prepared by dissolving chloroplatinic acid in isopropyl alcohol (platinum content 50 g/ℓ) was applied using a brush. The solution thus applied was thermally decomposed at 250°C to form a platinum coating layer on one side of the membrane.

The ion exchange membrane was placed in a two chamber electrolytic cell. At the platinum side, porous nickel (manufactured by Sumitomo Electric Industries, Ltd. and sold under the trade name "Celmet") with platinum applied thereon was employed as an electric collector. At the opposite chamber, the electric collector produced as described above was placed in contact with the above ion exchange membrane. $\beta$-lead dioxide powder prepared by electrolysis and passed through a 250 mesh screen was suspended in an aqueous lead nitrate solution and PTFE was further added thereto in an amount of 1 wt%. Using 400 g/ℓ of the above aqueous lead nitrate solution as an electrolyte with the above titanium electric collector as an anode and the platinum coated nickel as a cathode, electrolysis was carried out at a current density of 2 A/dm$^2$ and a temperature of 60°C.

After 8 hours of electrolysis, a porous lead dioxide electrically deposited layer having the total thickness of about 2 mm was formed. In the lead dioxide electrically deposited layer, as well as in the dispersed $\beta$-lead dioxide, white fibers considered to be PTFE were observed. The ion exchange membrane and the electric collector were combined together with the lead dioxide layer to form an assembly.

The assembly was washed, and deionized water was placed in the electrolytic cell. With the lead dioxide layer side as an anode, electrolysis was carried out at 20°C and a current density of 100 A/dm$^2$. From the anode side, oxygen containing 14% ozone was obtained. The cell voltage during electrolysis was 3.6 V.

## COMPARATIVE EXAMPLE 3

Upon production of ozone under the same conditions as in Example 7 omitting the formation of the electrically deposited layer using the aqueous lead nitrate solution and wherein the electric collector-attached layer-ion exchange membrane were combined into one body by the hot pressing, oxygen gas containing 8% ozone was obtained. The cell voltage during electrolysis was 6 V.

## EXAMPLE 8

In the same manner as provided in Example 7, an ion exchange membrane with platinum attached to the one side thereof and an anode collector with an underlying layer provided thereto were prepared. The ion exchange membrane was incorporated in this chamber electrolytic cell. The anode collector with an $\beta$-lead dioxide layer formed thereon was placed at a distance of 0.5 to 1 mm from the ion exchange membrane. In the anode compartment, a 400 g/ℓ aqueous lead nitrate solution was introduced containing a suspension of $\beta$-lead dioxide powder sieved through a 200 mesh screen and as obtained by electrolysis. Using the anode collector as an anode and placing a platinum collector prepared in Example 7 as a cathode, electrolysis was carried out for 6 hours at 60°C and a current density of 4 A/dm$^2$. An electrode assembly in which the anode collector and the ion exchange membrane were combined into one body by the lead dioxide electrically deposited layer was thus obtained.

Deionized water was introduced in both the anode compartment and the cathode compartment of the electrolytic cell and electrolyzed at 20°C and 100 A/dm$^2$ to obtain oxygen gas containing 14% of ozone. The cell voltage during electrolysis was 3.7 V.

## EXAMPLE 9

An ion exchange membrane subjected to pretreatment in the same manner as in Example 7 was incorporated in a two chamber electrolytic cell as a diaphragm. In one compartment, a 5 g/ℓ aqueous chloroplatinic acid solution was introduced, and in the other compartment, a 10 g/ℓ aqueous hydrazine solution was introduced. After 24 hours, a platinum layer was thus formed on one side of the ion exchange membrane.

The ion exchange membrane was thoroughly washed and incorporated in a two chamber electrolytic cell as a diaphragm. Porous nickel with a platinum coating formed thereon was placed in contact with the platinum membrane layer. At the other compartment, an electric collector with a lead dioxide layer formed on the surface thereof as fabricated in Example 1 was placed in contact with the ion exchange membrane.

In the electrolytic compartment at the opposite side of the platinum layer, a 400 g/ℓ aqueous lead nitrate solution containing 10 g/ℓ of $\beta$-lead oxide and 10 ml/ℓ of a perfluoro ion exchange resin solution was introduced. An electric potential was applied to the electric collectors with the platinum side serving as the cathode for 4 hours at a current density of 4 A/dm$^2$. A lead dioxide layer containing particles mainly (80 wt% or more) of $\beta$-lead dioxide particles was electrically deposited, to form an electrode assembly in which the ion exchange membrane and the anode collector were combined together into one unit.

The electrolytic solution was withdrawn from the electrolytic cell and the cell was then thoroughly washed. Then, deionized water was introduced into the cell as an electrolytic solution. Electrolysis was carried out at a current density of 100 A/dm$^2$. From the anode compartment, oxygen gas containing 16% ozone was obtained. The cell voltage during electrolysis was 3.6 V.

EXAMPLE 10

An electrolytic assembly was produced in the same manner as in Example 9 except that a mixture of $\beta$-lead dioxide and carbon fluoride was used as the suspension. The electrolytic assembly was incorporated in an electrolytic cell, and deionized water was introduced in the anode compartment and electrolyzed at 50 A/dm$^2$. From the anode compartment, oxygen gas containing about 9% ozone was obtained. The cell voltage during electrolysis was 3.3 V.

EXAMPLE 11

A commercially available perfluorosulfonic acid type cationic exchange membrane (Nafion 117), after roughening the surface thereof with #1000 emery paper, was dipped in a 5 wt% aqueous nitric acid solution to convert the sulfonic acid group into the H type and then incorporated in a two chamber electrolytic cell as a diaphragm. In one compartment, a 5 g/ℓ aqueous chloroplatinic acid solution was introduced, and in the other compartment, a 10 g/ℓ aqueous hydrazine solution was introduced. The solutions were then allowed to stand to form a platinum layer on one side of the membrane.

$\beta$-lead dioxide prepared by the electrolytic method of Example 1 was ground in an agate mortar to obtain a powder sieved through a 250 mesh screen. This powder was kneaded along with an aqueous PTFE suspension (30J) and a perfluoro ion exchange resin to form a paste. This paste was applied with a brush on the side of the ion exchange membrane opposite to the side on which platinum was deposited. The applied paste was allowed to stand at room temperature and smoothed and then heat pressed at a temperature of 160°C to form an attached layer.

An electric collector on which an underlying layer had been formed in the same manner as in Example 7 was coated with $\alpha$-lead dioxide in the same manner as in Example 7.

The above ion exchange membrane was incorporated in a two chamber electrolytic cell. Porous nickel with platinum coated thereon (Celmet) was brought into close contact with the platinum side of the ion exchange membrane. At the other side, the above prepared electric collector was brought into close contact with the $\beta$-lead dioxide attached layer on the ion exchange membrane. A 400 g/ℓ aqueous lead nitrate solution was added to the lead dioxide side, and electrolysis was carried out for 4 hours at a current density of 4 A/dm$^2$ using the titanium electric collector coated with lead dioxide as an anode. An electrode assembly was thus obtained in which the ion exchange membrane and the electric collector were combined together in one unit.

The electrolytic solution was withdrawn from the electrolytic cell, and the cell was then thoroughly washed with deionized water. Deionized water was then added to the lead dioxide compartment and electricity was passed therethrough at a current density of 100 A/dm$^2$. The liquid temperature was 20°C and the electrolytic voltage was 3.6 V. Oxygen gas containing 16% ozone was thus obtained from the anode side.

EXAMPLE 12

An electrode assembly was produced in the same manner as in Example 11 except that a mixture of a 1 g/ℓ aqueous suspension of PTFE and a 400 g/ℓ aqueous lead nitrate solution containing $\beta$-lead dioxide fine particles containing tantalum oxide was used as the electrolytic solution in formation of the electrically deposited lead dioxide layer.

The electrode assembly thus formed was incorporated into a two chamber electrolytic cell. Deionized water was added to the lead dioxide chamber and electrolysis was carried at a current density of 100 A/dm$^2$ using the lead dioxide as the anode. The electrolytic voltage was 3.5 V, and oxygen gas containing 15% ozone was obtained from the anode side.

**Claims**

1. An electrode catalyst comprising a lead dioxide having particles of $\beta$-lead dioxide dispersed therein as obtained by stripping from a substrate a layer which had been deposited on said substrate by electrolyzing a lead nitrate solution containing particles of $\beta$-lead dioxide suspended therein.

2. An electrode catalyst as in claim 1, further comprising particles of an electrolytic cocatalyst, different from $\beta$-lead dioxide, dispersed therein.

3. An electrode catalyst as in claim 1 or 2, wherein the electrolytic cocatalyst is at least one material selected from the group consisting of polytetrafluoroethylene, agar, gelatin, a perfluoro ion exchange resin, carbon fluoride, carbon, and oxides of one or more of titanium, zirconium, niobium and tantalum.

4. An electrode catalyst as in claim 1, 2 or 3, wherein the dispersed particles constitute from 5 to 70% by weight of the total weight of the electrically deposited layer of lead oxide.

5. A catalytic electrode comprising a lead dioxide layer on a surface of a substrate, said lead dioxide layer having particles of $\beta$-lead dioxide dispersed therein, as obtained by electrolyzing a lead nitrate solution containing said particles suspended therein and causing deposition of said lead dioxide layer on the surface of the substrate.

6. A catalytic electrode as in claim 5, wherein the dispersed particles further comprise particles of an electrolytic cocatalyst.

7. A catalytic electrode as in claim 6, wherein the electrolytic cocatalyst is at least one material selected from the group consisting of polytetrafluoroethylene, agar, gelatin, a perfluoro ion exchange resin, carbon fluoride, carbon and oxides of one or more of titanium, zirconium, niobium and tatalum.

8. A catalytic electrode as in claim 5, 6 or 7, wherein the dispersed particles constitute from 5 to 70% by weight of the total weight of the electrically deposited layer of lead dioxide.

9. A catalytic electrode as in claim 5, 6, 7 or 8, wherein the substrate is a fluoro resin-based ion exchange membrane.

10. A catalytic electrode as in claim 9, wherein an electric current collector in the form of a metallic mesh having an outer coating of lead dioxide is attached to said lead dioxide catalytic electrode layer which in turn is attached to a surface of said ion exchange membrane substrate.

11. A catalytic electrode as in claim 5, 6, 7 or 8, wherein the substrate is an electric current collector.

12. A catalytic electrode as in claims 5 and 9, wherein the substrate has nuclei for the growth of said deposited layer.

13. A method for producing a lead dioxide electrode catalyst, which comprises electrolyzing a substrate for deposition in an aqueous lead nitrate solution having particles containing $\beta$-lead dioxide powder suspended therein to form a lead dioxide electrically deposited layer on said substrate, said layer having particles containing $\beta$-lead dioxide powder dispersed therein; and thereafter separating the lead dioxide electrically deposited layer from the substrate.

14. A method for producing a lead dioxide electrode catalyst, which comprises electrolyzing a substrate for electrodeposition in an aqueous lead nitrate solution having particles containing $\beta$-lead dioxide powder suspended therein to thereby form a lead dioxide electrically deposited layer on said substrate, said layer having particles containing $\beta$-lead dioxide powder dispersed therein.

15. A method as in claim 14, wherein the substrate for electrodeposition is an ion exchange membrane.

16. A method as in claim 14, wherein the substrate for electrodeposition is an electric current collector.

17. A method as in claim 14, wherein the substrate has nuclei for growth of said electrically deposited layer.

**Patentansprüche**

1. Elektrodenkatalysator, der Bleidioxid umfaßt, das darin dispergierte Teilchen-von $\beta$-Bleidioxid hat, wie es durch das Abstreifen einer Schicht von einem Substrat erhalten wird, welche auf dem Substrat durch das Elektrolysieren einer Bleinitratlösung, die darin suspendierte Teilchen von $\beta$-Bleidioxid enthält, abgeschieden wurde.

2. Elektrodenkatalysator nach Anspruch 1, der ferner darin dispergierte Teilchen eines elektrolytischen Co-Katalysators, welcher von $\beta$-Bleidioxid verschieden ist, umfaßt.

3. Elektrodenkatalysator nach Anspruch 1 oder 2, worin der elektrolytische Co-Katalysator mindestens ein Material, ausgewählt aus der Gruppe bestehend aus Polytetrafluorethylen, Agar, Gelatine, einem Perfluorionenaustauscherharz, Kohlenstofffluorid,, Kohlenstoff und Oxiden von einem oder mehreren von der Gruppe bestehend aus Titan, Zirkon, Niob und Tantal, ist.

4. Elektrodenkatalysator nach Anspruch 1, 2 oder 3, worin die dispergierten Teilchen von 5 bis 70 Gew.-% des gesamten Gewichts der elektrisch abgeschiedenen Schicht aus Bleioxid ausmachen.

5. Katalytische Elektrode, die eine Bleidioxidschicht auf der Oberfläche eines Substrats umfaßt, wobei die Bleidioxidschicht darin dispergierte Teilchen von $\beta$-Bleidioxid hat, wie sie erhalten wird durch das Elektrolysieren einer Bleinitratlösung; welche diese Teilchen darin suspendiert enthält, und das Bewirken der Abscheidung der Bleidioxidschicht auf der Oberfläche des Substrats.

6. Katalytische Elektrode nach Anspruch 5, worin die dispergierten Teilchen ferner Teilchen eines elektrolytischen Co-Katalysators umfassen.

7. Katalytische Elektrode nach Anspruch 6, worin der elektrolytische Co-Katalysator mindestens ein Material, ausgewählt aus der Gruppe bestehend aus Polytetrafluorethylen, Agar, Gelatine, einem Perfluorionenaustauscherharz, Kohlenstofffluorid, Kohlenstoff und Oxiden von einem oder mehreren von der Gruppe bestehend aus Titan, Zirkon, Niob und Tantal, ist.

8. Katalytische Elektrode nach Anspruch 5, 6 oder 7, worin die dispergierten Teilchen von 5 bis 70 Gew.-% des gesamten Gewichts der elektrisch abgeschiedenen Schicht aus Bleidioxid ausmachen.

9. Katalytische Elektrode nach Anspruch 5, 6, 7 oder 8, worin das Substrat eine Ionenaustauschermembran auf Fluorharzbasis ist.

10. Katalytische Elektrode nach Anspruch 9, worin ein elektrischer Stromabnehmer in Form eines metallischen Netzes, das eine äußere Beschichtung aus Bleidioxid hat, mit der katalytischen Elektrodenschicht aus Bleidioxid verbunden ist, die ihrerseits mit einer Oberfläche des Ionenaustauschermembran-Substrats verbunden ist.

11. Katalytische Elektrode nach Anspruch 5, 6, 7 oder 8, worin das Substrat ein elektrischer Stromabnehmer ist.

12. Katalytische Elektrode nach den Ansprüchen 5 und 9, worin das Substrat Wachstumskeime für die abgeschiedene Schicht hat.

13. Verfahren zum Herstellen eines Bleidioxidelektrodenkatalysators, welches das Elektrolysieren eines Substrats zur Abscheidung in einer wässrigen Bleinitratlösung, in der Teilchen, welche $\beta$-Bleidioxidpulver enthalten, suspendiert sind, zum Bilden einer elektrisch abgeschiedenen Bleidioxidschicht auf dem Substrat, wobei in der Schicht Teilchen dispergiert sind, die $\beta$-Bleidioxidpulver enthalten; und das anschließende Abtrennen der elektrisch abgeschiedenen Bleidioxidschicht von dem Substrat, umfaßt.

14. Verfahren zum Herstellen eines Bleidioxidelektrodenkatalysators, welches das Elektrolysieren eines Substrats zur Elektroabscheidung in einer wässrigen Bleinitratlösung, in der Teilchen, welche $\beta$-Bleidioxidpulver enthalten, suspendiert sind, zum Bilden einer elektrisch abgeschiedenen Bleidioxidschicht auf dem Substrat umfaßt, wobei in dieser Schicht Teilchen, die $\beta$-Bleidioxidpulver enthalten, dispergiert sind.

15. Verfahren nach Anspruch 14, worin das Substrat zur Elektroabscheidung eine Ionenaustauschermembran ist.

16. Verfahren nach Anspruch 14, worin das Substrat zur Elektroabscheidung ein elektrischer Stromabnehmer ist.

17. Verfahren nach Anspruch 14, worin das Substrat Wachstumskeime für die elektrisch abgeschiedene Schicht hat.

**Revendications**

1. Un catalyseur d'électrode comprenant un dioxyde de plomb dans lequel sont dispersées des particules de dioxyde de plomb $\beta$ obtenu par élimination à partir d'un substrat d'une couche qui a été déposée sur ledit substrat par électrolyse d'une solution de nitrate de plomb contenant en suspension des particules de dioxyde de plomb $\beta$.

2. Un catalyseur d'électrode selon la revendication 1, comprenant en outre à l'état dispersé des particules d'un cocatalyseur électrolytique, différent de l'oxyde de plomb $\beta$.

3. Un catalyseur d'électrode selon la revendication 1 ou 2, selon lequel le cocatalyseur électrolytique est au moins un matériau choisi dans le groupe comprenant le polytétrafluoroéthylène, l'agar-agar, la gélatine, une résine échangeuse d'ions perfluoro, du fluorure de carbone, du carbone et des oxydes d'un ou plusieurs des suivants : titane, zirconium, niobium et tantale.

**4.** Un catalyseur d'élecrode selon la revendication 1, 2 ou 3 selon lequel les particules dispersées constituent de 5 à 70% en poids du poids total de la couche déposée électriquement d'oxyde de plomb.

**5.** Une électrode catalytique comprenant une couche de dioxyde de plomb sur une surface d'un substrat, ladite couche de dioxyde de plomb ayant des particules de dioxyde de plomb $\beta$ dispersées dedans, obtenues en électrolysant une solution de nitrate de plomb contenant lesdites particules en suspension dedans et en provoquant le dépôt de ladite couche de dioxyde de plomb sur la surface du substrat.

**6.** Une électrode catalytique selon la revendication 5, selon laquelle les particules dispersées comprennent en outre des particules d'un cocatalyseur électrolytique.

**7.** Une électrode catalytique selon la revendication 6, selon laquelle le cocatalyseur électrolytique est au moins un matériau choisi dans le groupe comprenant une polytétrafluoroéthylène, l'agar-agar, la gélatine, une résine échangeuse d'ions perfluoro, le fluorure de carbone, le carbone et les oxydes de l'un ou plusieurs des suivants : titane, zirconium, niobium et tantale.

**8.** Une électrode catalytique selon la revendication 5, 6 ou 7, selon laquelle les particules dispersées constituent de 5 à 70% en poids du poids total de la couche déposée électriquement de dioxyde de plomb.

**9.** Une électrode catalytique selon la revendication 5, 6, 7 ou 8, selon laquelle le substrat est une membrane échangeuse d'ions à base de résine fluorée.

**10.** Une électrode catalytique selon la revendication 9, selon laquelle un collecteur de courant électrique sous la forme d'un tamis métallique ayant un revêvement extérieur de dioxyde de plomb est attaché à ladite couche d'élecrode catalytique de dioxyde de plomb qui à son tour est attachée à la surface dudit substrat de membrane échangeuse d'ions.

**11.** Une électrode catalytique selon la revendication 5, 6, 7 ou 8 selon laquelle le substrat est un collecteur de courant électrique.

**12.** Une électrode catalytique selon les revendications 5 et 9, selon laquelle le substrat a des noyaux pour la croissance de ladite couche déposée.

**13.** Une méthode de production d'un catalyseur d'électrode de dioxyde de plomb, qui comprend l'électrolyse d'un substrat pour le dépôt dans une solution aqueuse de nitrate de plomb ayant des particules contenant une poudre de dioxyde de plomb $\beta$ en suspension dedans pour former une couche déposée électriquement de dioxyde de plomb sur ledit substrat, ladite couche ayant des particules contenant la poudre de dioxyde de plomb $\beta$ dispersée dedans ; et ensuite la séparation de la couche déposée électriquement de dioxyde de plomb du substrat.

**14.** Une méthode de production d'un catalyseur d'électrode de dioxyde de plomb qui comprend l'électrolyse d'un substrat pour l'électrodéposition dans une solution aqueuse de nitrate de plomb ayant des particules contenant une poudre de dioxyde de plomb $\beta$ en suspension dedans pour former une couche déposée électriquement de dioxyde de plomb sur ledit substrat, ladite couche ayant des particules contenant une poudre de dioxyde de plomb $\beta$ dispersée dedans.

**15.** Une méthode selon la revendication 14, selon laquelle le substrat pour l'électrodéposition est une membrane échangeuse d'ions.

**16.** Une méthode selon la revendication 14, selon laquelle le substrat pour l'électrodéposition est un collecteur de courant électrique.

**17.** Une méthode selon la revendication 14, selon laquelle le substrat a des noyaux pour la croissance de ladite couche déposée électriquement.